# EUROPEAN PATENT APPLICATION

(11) **EP 2 521 297 A2**
(43) Date of publication of application: **07.11.2012**
(21) Application number: 12179016.6
(22) Date of filing: 13.08.2008
(51) Int. Cl.: H04L 1/00

(54) **Method and apparatus for accomodating higher order modulation in wireless communication**

(30) Priority: 13.08.2007 US 955527 P
(62) Divisional of application: 08797817.7
(71) Applicant: INTERDIGITAL PATENT HOLDINGS, INC., Wilmington, Delaware 19810 (US)
(72) Inventor: Marinier, Paul, Brossard, Québec J4X 2J7 (CA); Pelletier, Benoit, Roxboro, Québec H8Y 1L3 (CA); Pani, Diana, Monteral, Québec H3H 2N8 (CA)
(74) Representative: Hjalmarsson, Magnus Axel

(57) **Abstract**

A method and apparatus for reconfiguring a wireless transmit/receive unit (WTRU) are directed to receiving an active set update message indicating that a mode of operation allowing a certain modulation scheme is enabled or disabled and performing at least one of: performing a MAC reset procedure, updating a set of reference enhanced transport format combination indicators (E-TFCIs) and associated power offsets, determining actions related to E-DPCCH boosting, modifying information related to an enhanced dedicated channel (E-DCH), and modifying an index that indicates an E-DCH transport block size table. The update message includes at least one modified information element (IE).

## Description

FIELD OF INVENTION

This application is related to wireless communications.

BACKGROUND

Higher-order modulation for the uplink (UL) has been introduced for some wireless communication networks. One example is Release 7 of the High Speed Packet Access (HSPA) specifications. In these specifications, for example, a user equipment (UE) may operate (or not) in the 16-symbol quadrature amplitude modulation (16QAM) mode. When the UE operates in the 16QAM mode, it has to utilize one of several newly defined enhanced dedicated channel (E-DCH) transport block tables appropriate for transmitting at data rates up to the maximum rates allowed by 16QAM operation. When the UE does not operate in the 16QAM mode, it has to utilize one of the original E-DCH transport block tables.

In practical deployments, not all cells of a radio network are necessarily upgraded at the same time to support a new feature such as 16QAM operation. Therefore, it is likely that in initial deployment, some cells in the network will support the feature and other will not. As the UE moves within the network, it will have to add cells to and remove cells from its active set that may or may not support 16QAM operation. A cell that supports 16QAM operation can properly receive signals from a UE not operating in 16QAM mode. However, a cell not supporting 16QAM operation can not properly receive signals from a UE operating in 16QAM mode. For this reason, a modification to the active set update procedure has been introduced whereby the network can signal to the UE whether it should start or stop 16QAM operation. The network would typically signal to the UE to stop 16QAM operation when a cell not supporting 16QAM operation is added to the active set, and may signal to the UE to start 16QAM operation when all cells in its active set support it.

Although this modification allows the network to signal the start or stop of 16QAM operation to the UE, the UE still does not have all the information it needs to properly switch between the two modes of operation. When switching operation, the UE cannot use some E-DCH configuration parameters as they are currently defined.

Additionally, when these parameters are changed, the enhanced media access control (MAC-e) needs to flush the UL hybrid automatic repeat request (HARQ) buffers which contain MAC-e PDUs with the old enhanced transport format combination index (E-TFCI) tables.

However, the current active set update procedure does not have any provisions to change the above mentioned E-DCH configuration parameters. Some of the parameters, such as E-DPCCH/DPCCH power offset and Reference E-TFCI, may be changed with the active set update but only when a serving E-DCH cell change occurs. However, starting and stopping of 16QAM operations may also occur when adding a new cell to the E-DCH active set without changing the serving cell.

The absence of this signaling in the active set update procedure prevents proper transitioning between 16QAM mode and non-16QAM (normal) mode when a cell is added or removed from the (E-DCH) active set or when the E-DCH serving cell is modified. By providing the mechanisms for proper transition between 16QAM mode and non-16QAM mode resulting from an active set update procedure, the embodiments to be described herein allow a reduction in reconfiguration delays and a reduction of signaling overhead (power and bandwidth).

SUMMARY

A method and apparatus are disclosed for reconfiguring a wireless transmit/receive unit (WTRU). The method comprises receiving an active set update message indicating that a mode of operation allowing a certain modulation scheme is enabled or disabled; and performing at least one of: performing a MAC reset procedure, updating a set of reference enhanced transport format combination indicators (E-TFCIs) and associated power offsets, determining actions related to E-DPCCH boosting, modifying information related to an enhanced dedicated channel (E-DCH), and modifying an index that indicates an E-DCH transport block size table. The update message includes at least one modified information element (IE).

BRIEF DESCRIPTION OF THE DRAWINGS

A more detailed understanding may be had from the following description, given by way of example in conjunction with the accompanying drawings wherein:

Figure 1 shows a signaling diagram for an active set update message for higher order modulation.

Figure 2 is a block diagram of an embodiment of a wireless transmit/receive unit (WTRU).

Figures 3A and 3B are a flowchart of an embodiment of a method for reconfiguring a WTRU in response to an update message.

DETAILED DESCRIPTION

When referred to hereafter, the terminology "wireless transmit/receive unit (WTRU)" includes but is not limited to a user equipment (UE), a mobile station, a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

A method and wireless transmit/receive unit (WTRU) are disclosed that enable re-configuring E-DCH transmission parameters when 16QAM operations are started or stopped following an active set update procedure.

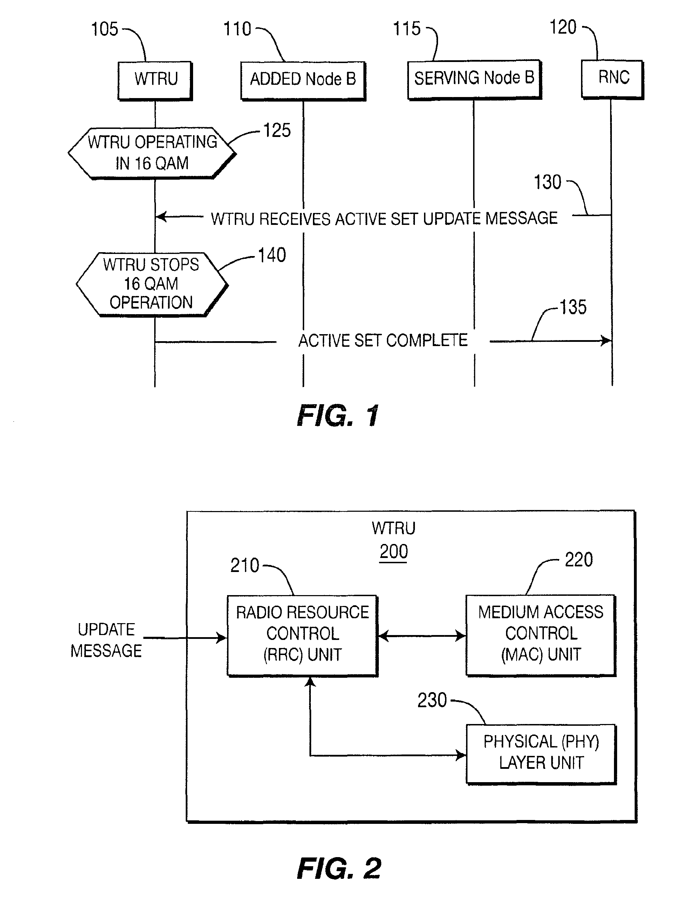

Figure 1 is an example of a signaling diagram which summarizes events occurring as a WTRU moves between cells which employ different modulation modes for communication. As a specific example, Figure 1 shows a case where a WTRU moves from a cell in which 16QAM modulation is available toward a cell where this modulation scheme is not available. In Figure 1, time progresses from top to bottom. Four vertical lines indicate status of four entities: the WTRU 105, a Node B 110 not providing 16 QAM, a Node B 115 providing 16QAM, and a radio network controller (RNC) 120 interacting with both Node Bs 110 and 115. Horizontal arrows show interactions between these entities.

At time 125 the WTRU is operating using 16QAM in communication with Node B 115. At time 130 the RNC senses that the WTRU is approaching the cell of Node B 110 which does not provide 16QAM. The RNC transmits an active set update message to the WTRU at time 130 for the purpose of updating an active set in the WTRU. The active set determines with which cells the WTRU can properly communicate. The WTRU receives the message and responds to it at time 140 by reconfiguring itself so that it can communicate with Node B 110 without using 16QAM since, Node B 110 does not support this particular modulation scheme. At time 135 the updating of the active set and reconfiguring of the WTRU is complete.

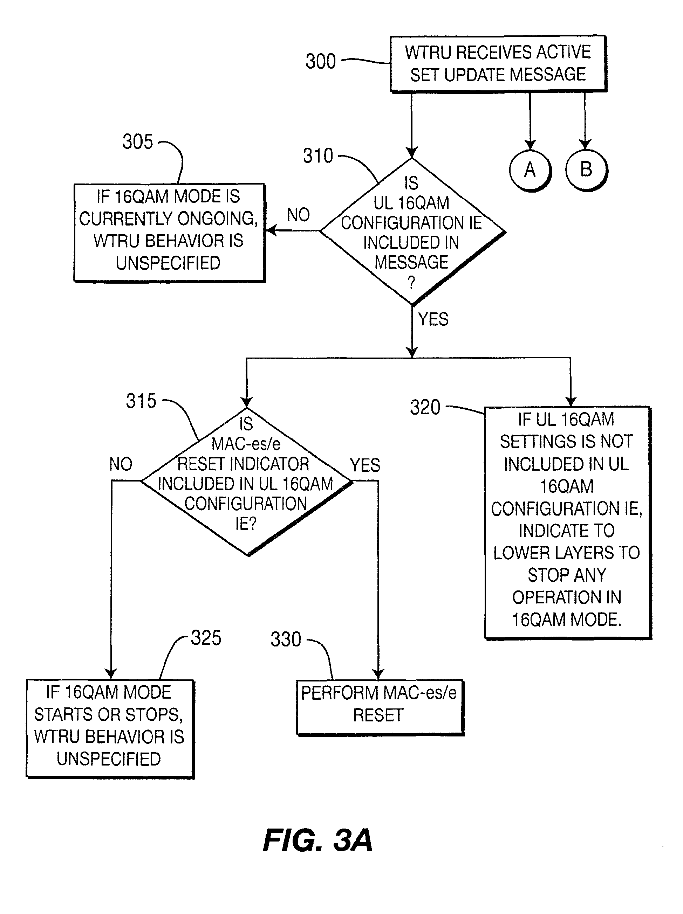

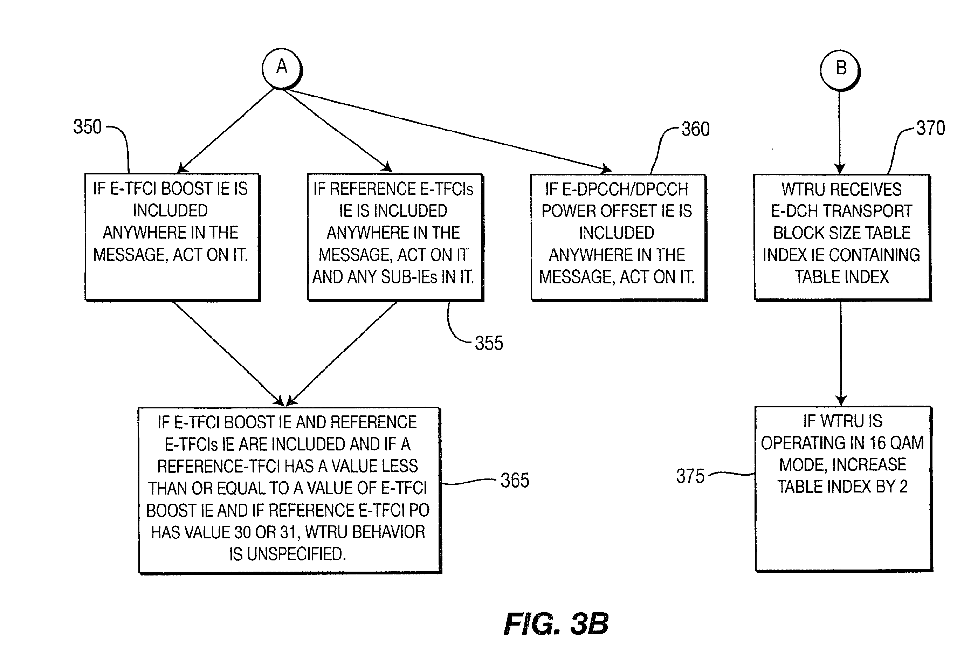

Figures 3A and 3B show an embodiment of a method for reconfiguring a WTRU in response to receiving an update message. The update message may contain newly defined information elements (IEs) for controlling update procedures. The WTRU acts on these IEs if certain conditions are met.

The active set update message is received at 300. The update procedure may include resetting a media access control (MAC), updating a set of reference enhanced transport format combination indicators (E-TFCIs) and associated power offsets, modifying information related to a dedicated channel (DCH), and modifying an index that indicates a transport block size table. Each of these will now be described in detail. The WTRU is assumed to be communicating within a wireless network.

First to be described is the procedure of resetting a MAC. In order to clear the buffers and start using the new E-DCH configuration, a MAC-es/e reset may be performed during the active set update procedure when a change of available modulation occurs, such as from 16QAM being available to not being available or vice-versa. This may be described as a change from 16QAM mode to non-16QAM mode or vice-versa. The network signals the WTRU through an information element (IE) included in the active set update message. The IE is included if MAC-es/e reset is to be performed. The WTRU may receive the message with this IE at 300. This particular IE may be included in the active set update message itself. It may be included in the root of the message or within an already included IE, such as an E-DCH reconfiguration info IE, or somewhere within the branching ("arborescence") of included IEs, or in a newly introduced group of IEs that are present when the WTRU supports, for example, 16 QAM. The latter case is shown in Figure 3A, and an example of a newly introduced IE designated UL 16QAM Configuration is shown in 310. Details of the UL 16QAM Configuration IE and its included sub-IEs are presented in Table 4 below.

Referring to Figure 3A, the WTRU checks the active set update message, received at 300, for the presence of the UL 16QAM Configuration IE, 310. If the UL 16QAM Configuration IE is not included in the message at 310 and if the WTRU is operating in 16QAM modulation mode, the WTRU behavior is unspecified, 305.

If the UL 16QAM Configuration IE is present, the WTRU checks if this IE includes a MAC-es/e reset indicator, 315. If this reset indicator is present the WTRU performs a reset of MAC-es/e entity, 330. The reset may be performed according to the standard 3GPP TS 25.321, version 7.5.0 or later. If the reset indicator is not present and the WTRU starts or stops 16QAM mode operation, the WTRU behavior is unspecified, 325.

If the UL 16QAM Configuration IE is found to be included in 310 but this IE does not include an IE called UL 16QAM Settings, an indication may be sent to lower layers in the WTRU to stop any operation in 16QAM mode, 320.

Alternatively, the WTRU may perform a MAC-es/e reset if the UL 16QAM Configuration IE is present, and may not perform a MAC-es/e reset if this IE is not present.

Alternatively, the WTRU may perform MAC-es/e reset if 16QAM mode operation is started or stopped.

Next to be described is updating a set of reference enhanced transport format combination indicators (E-TFCIs) and associated power offsets. In general, a TFCI allows receiving layers to identify a currently valid Transport Format Combination and hence enables a receiver to decode, de-multiplex and deliver received data. The WTRU may update reference E-TFCIs and associated power offsets even if the E-DCH serving cell is not changed by the active set update procedure. When 16 QAM mode is started or stopped, the reference E-TFCI and associated power offsets are updated accordingly.

Again, new IEs may be defined for this purpose. These IEs, referred to in the following description, are described in Tables 1-4 below. Referring to Figure 3B and Tables 1-4, if the E-TFCI Boost IE is included anywhere in the active set update message at 300, this IE is acted upon, 350. If the E-DPCCH/DPCCH Power Offset IE is included anywhere in the active set update message at 300, this IE is acted upon, 360. If the Reference E-TFCIs IE is included anywhere in the active set update message at 300, this IE is acted upon, and any sub-IEs in it are acted upon 355. If the E-TFCI Boost IE and Reference E-TFCIs IE are both included in the update message (350 and 355), and if a reference E-TFCI has a value less than or equal to a value of the E-TFCI Boost IE, and if the Reference E-TFCI PO has a value equal to one or more predetermined values, then the behavior of the WTRU is left unspecified 365. In the particular example of Tables 2 and 3, the predetermined values used for both reference E-TFCI PO IEs are 30 and 31.

Note that this Reference E-TFCI PO IE is distinct from an existing IE of the same name within the E-DCH reconfiguration information IE (Table 2). The two Reference E-TFCI PO IEs may contain the same information but should never be present simultaneously.

Again, the IEs may be present in the active set update message itself. Alternatively, they may be included in the root of the message or in one of the included IEs, or somewhere within the branching of included IEs. The WTRU starts using the new IEs at the activation time. If the new IE is not included the WTRU may keep using an existing reference E-TFCI and power offsets with the indices now pointing to the new E-DCH Transport Block Size table. Alternatively, if the new IE is not included, the WTRU behavior is unspecified. Other parameters that are not listed above may need to be modified when 16QAM operations are started or stopped. This may be achieved by the same or similar method as that described above.

Next to be described is modifying an index that indicates a transport block size. In current specifications, there are two sets of E-DCH Transport Block Size tables specified for 2ms transport time interval (TTI): two tables (2ms TTI E-DCH Transport Block Size Table 0 and 1) for QPSK operations and two tables for 16QAM operations (2ms TTI E-DCH Transport Block Size Table 2 and 3). Referring to Figure 3B, the WTRU receives the table index 0 or 1 in the E-DCH Transport Block Size table index IE 370 which, in turn, is contained in the active set update message, 300. If the WTRU is operating in 16QAM mode the WTRU automatically adds 2 to the table index, thereby indicating that the 16QAM tables are to be used, 375. In this case, indices in the Scheduling Grant (SG) table may refer to Scheduling Grant Table 2 in the standard 3GPP TS 25.321, version 7.5.0 or later.

It may be desirable to change the E-DCH Transport Block Size table index during an active set update procedure resulting in a change of 16QAM operations, an operation that is not possible in current specifications.

Various alternatives may be implemented, each alternative affecting where the above procedures get executed in the active set update procedure - that is, where in the active set update message the IEs are located relative to existing IEs.

In a first alternative, IEs may be added as part of the E-DCH reconfiguration information IE. Specifically, IEs for the MAC es/e reset indicator and E-TFCI boost may be added to the E-DCH RL Info new serving cell sub IE, and IEs for E-DPCCH/DPCCH power offset and Reference E-TFCIs and its related sub IEs may be added to the E-DCH RL Info other cells IE.

In a second alternative, the added IEs above are added as part of the E-DCH reconfiguration information IE. The difference in this alternative is that the IEs MAC es/e reset indicator, E-TFCI boost, and E-TFCI BetaED Switch above are added to the root of the E-DCH reconfiguration information, while the other IEs for E-DPCCH/DPCCH power offset and Reference E-TFCIs and its related sub IEs are added under the E-DCH RL Info other cells sub IE.

In a third alternative, an E-DCH Info IE is added to the active set update message, optionally adding conditions to ensure no ambiguity results from having the same IE repeated at different places within the active set update message branching.

In a fourth alternative, a new IE is created that contains all other new IEs and is added to the active set update message. This IE may always be present, or it may be present only if 16QAM is supported by the UE, or only present if the 16QAM operation is stopped or started.

Figure 2 shows an embodiment of a WTRU 200 configured for implementing the methods described above. WTRU 200 includes a radio resource control (RRC) unit 210 in communication with a Media Access Control (MAC) unit 220 and with a physical layer (PHY) unit 230. Physical layer unit 230 may embody the Layer 1 (L1) known in certain models of wireless communications.

RRC unit 210 receives an update message. The message may come from a radio network controller (RNC, not shown in Figure 2) such as feature 120 in Figure 1. RRC unit 210 processes the message and responds by interacting with MAC unit 220 and PHY unit 230 to reconfigure WTRU 200 in response to the message, according to the method described above.

Tables 1-4 show details of new and modified IEs according to the above descriptions.

### Active Set Update

**Table 1**

| **Information Element/Group name** | **Need** | **Multi** | **Type and reference** | **Semantics description** | **Version** |
|---|---|---|---|---|---|
| ... | ... | ... | ... | ... | ... |
| UL 16QAM configuration | OP | | UL16QAM configuration 10.3.6.69c | | REL-7 |
| E-DCH reconfiguration information same serving cell | OP | | E-DCH reconfigurati on information same serving cell 10.3.6.69b | This IE is not present if the serving E-DCH cell is changed with this message. | REL-7 |
| E-TFCI boost | OP | | Integer (0..127) | E-TFCI threshold beyond which boosting of E-DPCCH is enabled | REL-7 |
| E-TFCI BetaED Switch | OP | | Enumerated (etfci-0, etfci-128) | E-TFCI threshold used for the computation of the gain factor *β_{ed}* according to 3GPP TS 25.214 | REL-7 |
| ... | ... | ... | ... | ... | ... |

### E-DCH reconfiguration information

**Table 2**

| **Information Element/Group name** | **Need** | **Multi** | **Type and reference** | **Semantics description** | **Version** |
|---|---|---|---|---|---|
| ... | ... | ... | ... | ... | ... |
| >>Reference E-TFCI PO | MP | | Integer (0..29) | Refer to quantization of the power offset in 3GPP TS 25.213 | REL-6 |
| | | | (30, 31) | Values 30 and 31 are only used for E-TFCI > ETFCI Boost | REL-7 |
| ... | ... | ... | ... | ... | ... |

### E-DCH reconfiguration information same serving cell

**Table 3**

| **Information Element/Group name** | **Need** | **Multi** | **Type and reference** | **Semantics description** | **Version** |
|---|---|---|---|---|---|
| E-DPCCH/DNCCH power offset | OP | | Integer (0..8) | This IE is not present if the serving E-DCH cell is changed with this message. Refer to quantization of the power offset in 3GPP TS 25.213 | REL-7 |
| Reference E-TFCIs | OP | 1 to 8 | | This IE is not present if the serving E-DCH cell is changed with this message. See 3GPP TS 25.214. | REL-7 |
| >Reference E-TFCI | MP | | Integer (0..127) | | REL-7 |
| >Reference E-TFCI PO | MP | | Integer (0..29) | Refer to quantization of the power offset in 3GPP TS 25.213 | REL-7 |
| | | | (30, 31) | Values 30 and 31 are only used for E-TFCI > ETFCI Boost | REL-7 |

### UL 16QAM configuration

**Table 4**

| **Information Element/Group name** | | **Need** | **Multi** | **Type and reference** | **Semantics description** | **Version** |
|---|---|---|---|---|---|---|
| UL 16QAM settings | | OP | | UL 16QAM settings 10.3.6.86a | Presence of this IE indicates that the UE should operate in 16QAM mode; absence indicates that the UE is not to operate in 16QAM mode. | REL-7 |
| MAC-es/e reset indicator | | OP | | Enumerated (true) | TRUE Indicates the MAC-es/e entity needs to be reset. | REL-7 |
| E-TFCI table index | | OP | | Integer (0..1) | Indicates which standardised E-TFCI TB size table shall be used. See Note 1. | REL-7 |
| NOTE | 1: If the UE is operating in 16QAM mode, the value of "E-TFCI table index" is increased by 2, and indices in the SG-Table refer to Scheduling Grant Table 2 in [15]. | | | | | |

Embodiments
1. A method for reconfiguring a wireless transmit/receive unit (WTRU) media access control (MAC) entity comprising performing an active set update procedure.
2. The method as in embodiment 1, wherein the reconfiguring is done using an enhanced uplink dedicated channel (E-DCH).
3. The method as in embodiment 1, wherein the MAC entity reset is performed during an active set update procedure when a change of modulation mode occurs.
4. The method as in embodiment 3, wherein the higher order modulation mode is a 16QAM modulation mode that enables the use of 16-symbol quadrature amplitude modulation (16QAM) transmission and reception.
5. A method as in any preceding embodiment, wherein the MAC entity is defined as a MAC-es/e.
6. A method as in any preceding embodiment, further comprising clearing buffers.
7. A method as in any of embodiments 3-5, wherein the WTRU performs the MAC entity reset if a 16QAM mode is started or stopped.
8. A method as in any preceding embodiment, further comprising the WTRU receiving an information element (IE) within an ACTIVE SET UPDATE message if a MAC layer reset is to be performed.
9. The method as in embodiment 8, wherein the IE is an enhanced uplink dedicated channel reconfiguration information IE.
10. A method as in embodiment 8 or 9, wherein the IE is a newly introduced group of IEs that are present only when the WTRU supports 16QAM.
11. A method as in any of embodiments 8-10, wherein the WTRU performs a MAC reset if the IE is present.
12. A method as in any of embodiments 8-10, wherein the WTRU does not perform a MAC reset if the IE is not present.
13. A method as in any of embodiments 1-7, further comprising the network signaling the WTRU through an information element (IE) part of the ACTIVE SET UPDATE message if a MAC reset is to be performed.
14. The method as in embodiment 13, wherein the Active Set Update message includes a group of IEs that are present when the WTRU supports a higher order modulation mode.
15. The method as in embodiment 14, further comprising the WTRU performing a MAC reset if the IE is present.
16. A method as in embodiment 14 or 15, further comprising if the IE is not present and the WTRU stopped or started the higher order modulation mode, the WTRU behavior is unspecified.
17. A method as in any preceding embodiment, further comprising the WTRU updating a plurality of reference E-DCH transport format combination indicators (E-TFCIs) and associated power offsets.
18. The method as in embodiment 17, wherein the E-DCH serving cell is not changed by the active set update procedure.
19. A method as in any of embodiments 17-18, further comprising updating the reference E-TFCI and associated power offsets when the higher order modulation operation is started or stopped.
20. The method as in embodiment 19, wherein the network signals the reference E-TFCIs and the associated power offsets to the WTRU through a set of IEs that are part of the ACTIVE SET UPDATE message.
21. The method as in embodiment 20, wherein the set of IEs is present in a root of the active set update message or in an IE included in the message.
22. A method as in embodiment 20 or 21, wherein the WTRU starts using a new mapping at the activation time.
23. A method as in any of embodiments 20-22, wherein if the IE is not included the WTRU keeps using the existing reference E-TFCI and power offsets with the indices now pointing to a new table.
24. A method as in any of embodiments 20-23, further comprising the network signaling the reference E-TFCIs and the associated power offsets to the WTRU through a set of IEs that are part of the active set update message.
25. The method as in embodiment 24, wherein the set of IEs is present in the active set update message or in one of the included IEs.
26. The method as in embodiment 25, wherein the WTRU starts using a new mapping at the activation time.
27. The method as in embodiment 25 or 26, wherein if the IEs are not included, the WTRU behavior is unspecified.
28. A method as in any preceding embodiment, further comprising the WTRU updating other E-DCH related information including at least one of the following parameters:
   E-DPCCH/DPCCH power offset; and
   E-TFCI Boost.
29. The method as in embodiment 28, wherein the network signals each E-DCH information parameter through a separate IE as part of the active set update message.
30. The method as in embodiment 29, wherein the IEs are present in a root of the active set update message or in one of the included IEs.
31. The method as in embodiment 30, wherein the WTRU starts using the new parameters at the activation time.
32. The method as in embodiment 30, wherein if the related IE is not included, the WTRU keeps using the existing parameter value.
33. A method as in any preceding embodiment, further comprising updating an E-DCH Transport Block Size table index related to E-DCH transport block size tables.
34. The method as in embodiment 33, further comprising signaling an E-DCH Transport Block Size table index through an IE as part of the active set update message.
35. The method as in embodiment 34, wherein the IE is present in a root of the active set update message or in one of the included IEs.
36. A method as in embodiment 34 or 35, wherein if the IE is present, the WTRU starts using an enhanced dedicated channel (E-DCH) transport block table specified by the IE at the activation time.
37. A method as in any of embodiments 34-36, wherein if the IE is not present, the WTRU keeps the previous enhanced dedicated channel (E-DCH) transport block table value.
38. A method as in any preceding embodiment, further comprising configuring the active set update message such that the root of the message include one or more of the following IEs:
   a MAC es/e reset indicator;
   an E-TFCI boost;
   an E-TFCI BetaED Switch;
   an E-DPCCH/DPCCH power offset; and
   a Reference E-TFCI and its related sub IEs.
39. The method as in embodiment 38, further comprising modifying a procedure for reception of an active set update message by the WTRU to act on the IEs included in the active set update.
40. The method as in embodiment 38, wherein the one or more IEs are added as part of an E-DCH reconfiguration information IE within the active set update message.
41. The method as in embodiment 40, wherein IEs for the MAC es/e reset indicator and E-TFCI boost, are added to the E-DCH RL Info new serving cell sub IE, and the IEs for E-DPCCH/DPCCH power offset and Reference E-TFCIs and its related sub IEs are added to an E-DCH-RL-Info-other-cells sub IE.
42. The method as in embodiment 40, wherein the IEs for MAC es/e reset indicator and E-TFCI boost are added to the root of the "E-DCH reconfiguration information" IE, while the other IEs for E-DPCCH/DPCCH power offset and Reference E-TFCIs and its related sub IEs are added under the E-DCH RL-Info-other-cells sub IE.
43. The method as in embodiment 40, wherein the IE for E-DCH Info is added to the active set update message.
44. The method as in embodiment 43, further comprising adding conditions to ensure no ambiguity results from having the same IE repeated at different places within the active set update message.
45. The method as in embodiment 38, further comprising creating a new IE that contains the IEs for the MAC es/e reset indicator, the E-TFCI boost; the E-DPCCH/DPCCH power offset; and the Reference E-TFCI and its related sub IEs, and adding the new IE to the active set update message.
46. The method as in embodiment 45, wherein the new IE is always be present, or is present only higher order modulation is supported by the WTRU, or is only present if the higher order modulation is stopped or started.
47. A wireless transmit/receive unit (WTRU) configured to implement a method as in any of embodiments 1-46.

Although features and elements are described above in particular combinations, each feature or element can be used alone without the other features and elements or in various combinations with or without other features and elements. The methods or flow charts provided herein may be implemented in a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) or Ultra Wide Band (UWB) module.
48. A method for reconfiguring a wireless transmit/receive unit (WTRU) to enable or disable operation allowing a certain modulation scheme, comprising:
   receiving an active set update message indicating that a mode of operation allowing a certain modulation scheme is enabled or disabled; and performing at least one of:
   performing a MAC reset procedure;
   updating a set of reference enhanced transport format combination indicators (E-TFCIs) and associated power offsets;
   determining actions related to E-DPCCH boosting;
   modifying information related to an enhanced dedicated channel (E-DCH); and
   modifying an index that indicates an E-DCH transport block size table.
49. The method of embodiment 48 wherein the update message contains information enabling the WTRU to update an active set; the active set indicating active cells available to the WTRU for communication.
50. The method of embodiment 48, wherein performing a MAC reset procedure comprises performing a MAC-e/es reset.
51. The method of embodiment 50 wherein performing the MAC-es/e reset occurs only if the WTRU receives a particular information element (IE) contained in the update message.
52. The method of embodiment 48, wherein the modifying of information related to an enhanced dedicated channel (E-DCH) comprises modifying a power offset of an enhanced dedicated physical control channel (E-DPCCH).
53. The method of embodiment 48, wherein determining actions related to E-DPCCH boosting comprises modifying an E-TFCI threshold, wherein boosting of E-DPCCH is enabled ifan E-TFCI value exceeds the threshold.
54. The method of embodiment 52, wherein modifying a power offset of an enhanced dedicated physical control channel (E-DPCCH) comprises:
   using a new value of the power offset if received in a separate IE included in the update message; and
   using an existing value of the power offset if the separate IE is not included in the update message.
55. The method of embodiment 53, wherein modifying an E-TFCI threshold comprises:
   using a new value of the threshold if received in a separate IE included in the update message; and
   using an existing value of the threshold if the separate IE is not included in the update message.
56. The method of embodiment 48, wherein modifying an index that indicates an E-DCH transport block size table comprises:
   using an E-DCH Transport Block Size table indicated by an index received in a separate IE included in the update message; and
   using an E-DCH Transport Block Size table indicated by a previous index if the separate IE is not included in the update message.
57. The method of embodiment 48 further comprising predefining information elements (IEs) to be optionally included in the update message, the IEs including at least one of:
   a UL 16QAM configuration IE comprising at least one of:
      a UL 16QAM settings IE, the presence of which indicates that the WTRU may operate in 16QAM mode, and the absence of which indicates that the WTRU is not to operate in 16QAM mode,
      a MAC-es/e reset indicator, configured to indicate whether or not a MAC-es/e entity is to be reset, and
      an E-TFCI table index IE, configured to indicate which standardized E-DCH transport block size table shall be used;
      an E-TFCI boost IE, setting an E-TFCI threshold beyond which the E-DPCCH boosting is enabled; and
      an E-DCH reconfiguration information IE comprising a first reference E-TFCI power offset (E-TFCI PO) IE, the first reference E-TFCI PO IE comprising an integer, wherein the integer can take on values which are used only when an E-TFCI exceeds the E-TFCI boost threshold.
58. The method of embodiment 57, wherein the UL 16QAM settings IE is the UL 16QAM settings IE defined in section 10.3.6.86a of the standard 3GPP TS 25.331, version 7.6.0 or later.
59. The method of embodiment 48, wherein the active set update message comprises at least one of:
   an E-DPCCH/DPCCH power offset IE, which is not present if a serving E-DCH cell is changed with the update message;
   a reference E-TFCIs IE, which is not present if the serving E-DCH cell is changed with the message;
   sub IEs related to the reference E-TFCIs IE;
   a reference E-TFCI IE, comprising an integer; and
   a reference E-TFCI PO IE comprising an integer, wherein the integer can take on values used only when an E-TFCI exceeds the E-TFCI boost threshold.
60. The method of embodiment 59, wherein the reference E-TFCI PO IE is based on quantization of power offset described in the standard 3GPP TS 25.213.
61. The method of embodiment 57, wherein resetting a MAC comprises:
   determining if the UL 16QAM configuration IE is included in the update message; and
   if the UL 16QAM configuration IE is included, performing at least one of:
      indicating to lower layers to stop any operation in a particular modulation mode if the UL 16QAM settings IE is not included in the UL 16QAM configuration IE;
      determining whether or not a MAC-es/e reset indicator is included in the UL 16QAM configuration IE; and
      resetting a MAC-es/e entity if the MAC-es/e reset indicator is included.
62. The method of embodiment 61, wherein the particular modulation mode is 16-symbol quadrature amplitude modulation (16QAM).
63. The method of embodiment 61, wherein if the MAC-es/e reset indicator is not included and if operation in a particular modulation mode starts or stops,
   behavior of the WTRU is unspecified.
64. The method of embodiment 63, wherein the particular modulation mode is 16QAM.
65. The method of embodiment 61, wherein resetting a MAC-es/e entity is performed according to the standard 3GPP TS 25.321, version 7.5.0 or later.
66. The method of embodiment 61 wherein if the UL 16QAM configuration IE is not included in the update message and if the WTRU is operating in a particular modulation mode, behavior of the WTRU is unspecified.
67. The method of embodiment 66 wherein the particular modulation mode allows 16QAM modulation.
68. The method of embodiment 59 wherein updating a set of reference enhanced transport format combination indicators and associated power offsets comprises:
   if an E-TFCI boost IE is included anywhere in the message; acting on the E-TFCI boost IE;
   if the E-DPCCH/DPCCH Power Offset IE is included anywhere in the message, acting on the E-DPCCH/DPCCH Power Offset IE; and
   if the Reference E-TFCIs IE is included anywhere in the message, acting on the Reference E-TFCIs IE and any sub-IEs in it.
69. The method of embodiment 57, wherein at least one of the IEs is added at the root of the update message.
70. The method of embodiment 57, wherein at least one of the IEs is added within another IE.
71. The method of embodiment 57, wherein at least one of the IEs is added within an E-DCH reconfiguration information IE.
72. The method of embodiment 57, wherein an E-DCH Info IE is added to the active set update message.
73. A wireless transmit/receive unit (WTRU) comprising:
   a media access control (MAC) unit;
   a radio resource control (RRC) unit connected to the MAC unit and configured to receive an active set update message indicating that a mode of operation allowing a certain modulation scheme is enabled or disabled; and
   a physical layer (PHY) unit connected to the RRC unit;
   the RRC unit configured to respond to the update message by performing at least one of:
   interacting with the MAC to perform a MAC reset procedure; and
   interacting with the PHY to:
      update a set of reference enhanced transport format combination indicators (E-TFCIs) and associated power offsets;
      determine actions related to E-DPCCH boosting;
      modify information related to an enhanced dedicated channel (E-DCH); and
      modify an index that indicates an E-DCH transport block size table.
74. The WTRU of embodiment 73, wherein at least one of the RRC and PHY is configured to update an active set, the active set indicating active cells available to the WTRU for communication.
75. The WTRU of embodiment 73, wherein the RRC unit is configured to interact with the MAC to perform a MAC reset procedure by performing a MAC-e/es reset.
76. The WTRU of embodiment 75, wherein the RRC is configured to perform the MAC-es/e reset only if the RRC receives a particular information element (IE) contained in the update message.
77. The WTRU of embodiment 73 wherein at least one of the RRC and PRY is configured to perform the modifying of information related to a dedicated channel (DCH) by modifying a power offset of a dedicated physical control channel (DPCCH).
78. The WTRU of embodiment 73 wherein at least one of the RRC and PRY is configured to determine actions related to E-DPCCH boosting by modifying an E-TFCI threshold, wherein boosting of E-DPCCH is enabled if an E-TFCI value exceeds the threshold.
79. The WTRU of embodiment 77, wherein at least one of the RRC and PRY is configured to perform the modifying a power offset of an enhanced dedicated physical control channel (E-DPCCH) by:
   using a new value of the power offset if received in a separate IE included in the update message; and
   using an existing value of the power offset if the separate IE is not included in the update message.
80. The WTRU of embodiment 78 wherein at least one of the RRC and PRY is configured to modify an E-TFCI threshold by:
   using a new value of the threshold if received in a separate IE included in the update message; and
   using an existing value of the threshold if the separate IE is not included in the update message.
81. The WTRU of embodiment 73, wherein at least one of the RRC and PRY is configured for the modifying of an index that indicates a transport block size table by:
   using an E-DCH Transport Block Size table indicated by an index received in a separate IE included in the update message; and
   using an E-DCH Transport Block Size table indicated by a previous index if the separate IE is not included in the update message.
82. The WTRU of embodiment 73, wherein at least one of the RRC and PRY is configured to receive and respond to the update message if the message comprises predefined information elements (IEs) the IEs comprising at least one of:
   a UL 16QAM configuration IE comprising at least one of:
      a UL 16QAM settings IE, the presence of which indicates
   that the WTRU may operate in 16QAM mode, and the absence of which indicates that the WTRU is not to operate in 16QAM mode,
   a MAC-es/e reset indicator, configured to indicate whether or not a MAC-es/e entity is to be reset, and
   an E-TFCI table index IE, configured to indicate which standardized E-DCH Transport Block Size table shall be used;
   an E-TFCI boost IE, setting an E-TFCI threshold beyond which boosting of an E-DPCCH is enabled;
   and
   an E-DCH reconfiguration information IE comprising a first reference E-TFCI PO IE, the first reference E-TFCI PO IE comprising an integer,
   wherein the integer can take on values used only when an E-TFCI exceeds the E-TFCI boost threshold.
83. The WTRU of embodiment 82, wherein at least one of the RRC and PRY is configured to receive and respond to the update message if the UL 16QAM settings IE is the UL 16QAM settings IE defined in section 10.3.6.86a of the standard 3GPP TS 25.331, version 7.6.0 or later.
84. The WTRU of embodiment 82, wherein at least one of the RRC and PRY is configured to receive and respond to the update message if the message comprises at least one of:
   an E-DPCCH/DPCCH power offset IE, which is not present if a serving E-DCH cell is changed with the message;
   a reference E-TFCIs IE, which is not present if the serving E-DCH cell is changed in the update message;
   sub IEs related to the reference E-TFCIs IE
   a reference E-TFCI IE, comprising an integer; and
   a reference E-TFCI PO IE comprising an integer defining quantization of a power offset, wherein the integer can take on values used only when an E-TFCI exceeds the E-TFCI boost threshold.
85. The WTRU of embodiment 84, wherein at least one of the RRC and PHY is configured to receive and respond to the update message if the reference E-TFCI PO IE is based on quantization of power offset described in the standard 3GPP TS 25.213.
86. The WTRU of embodiment 82, wherein at least one of the RRC and PHY is configured to receive the update message and reset the MAC by:
   determining if the UL 16QAM configuration IE is included in the update message; and
   if the UL 16QAM configuration IE is included, performing at least one of:
      indicating to lower layers to stop any operation in a particular modulation scheme if the UL 16QAM settings IE is not included in the UL 16QAM configuration IE,
      determining whether or not a MAC-es/e reset indicator is included in the UL 16QAM configuration IE, and
      resetting a MAC-es/e entity if the MAC-es/e reset indicator is included.
87. The WTRU of embodiment 86, wherein at least one of the RRC and PRY is configured to receive and respond to the update message if the particular modulation mode is 16-symbol quadrature amplitude modulation (16QAM).
88. The WTRU of embodiment 86, wherein at least one of the RRC and MAC is configured to receive and respond to the update message such that if the MAC-es/e reset indicator is not included and if operation in a particular mode starts or stops, behavior of the WTRU is unspecified.
89. The WTRU of embodiment 86, wherein at least one of the RRC and MAC is configured to receive and respond to the update message if the particular modulation mode is 16-symbol quadrature amplitude modulation (16QAM).
90. The WTRU of embodiment 86, wherein at least one of the RRC and MAC is configured to receive and respond to the update message if resetting a MACes/e entity is performed according to the standard 3GPP TS 25.321, version 7.5.0 or later.
91. The WTRU of embodiment 86, wherein at least one of the RRC and PRY is configured to receive and respond to the update message such that if the UL 16QAM configuration IE is not included in the update message and if the WTRU is operating in a particular modulation mode, behavior of the WTRU is unspecified.
92. The WTRU of embodiment 91, wherein at least one of the RRC and PRY is configured to receive and respond to the update message if the particular modulation mode is 16QAM.
93. The WTRU of embodiment 84, wherein at least one of the RRC and PRY is configured to update a set of reference enhanced transport format combination indicators and associated power offsets by:
   if an E-TFCI boost IE is included anywhere in the message; acting on the E-TFCI boost IE;
   if the E-DPCCH/DPCCH Power Offset IE is included anywhere in the message, acting on the E-DPCCH/DPCCH Power Offset IE; and
   if the Reference E-TFCIs IE is included anywhere in the message, acting on the E-TFCIs IE and any sub-IEs in it.
94. The WTRU of embodiment 82, wherein at least one of the RRC , MAC, and PRY is configured to receive and respond to the update message if at least one of the IEs is added at the root of the update message.
95. The WTRU of embodiment 82, wherein at least one of the RRC, MAC, and PHY is configured to receive and respond to the update message if at least one of the IEs is added within another IE.
96. The WTRU of embodiment 82, wherein at least one of the RRC, MAC, and PHY is configured to receive and respond to the update message if at least one of the IEs is added within an E-DCH reconfiguration information IE.
97. The WTRU of embodiment 82, wherein at least one of the RRC, MAC, and PHY is configured to receive and respond to the update message if an E-DCH Info IE is added to the active set update message.

## Claims

1. A method for reconfiguring a wireless transmit/receive unit (WTRU) in response to an active set update message, the method comprising:
transmitting the active set update message including a modulation mode information element (IE), the modulation mode IE indicating to the WTRU whether to operate in a modulation mode,
wherein the modulation mode IE comprises at least one of:
a media access control (MAC) reset indicator that indicates to the WTRU whether to reset the MAC; or
an E-TFCI table index that indicates to the WTRU which E-TFCI transport block size table to use.

2. The method of claim 1, wherein the modulation mode is 16-symbol quadrature amplitude modulation (16QAM).

3. The method of claim 1, wherein the active set update message contains information enabling the WTRU to update an active set which indicates active cells available to the WTRU for communication.

4. The method of claim 1, wherein the active set update message further indicates to the WTRU whether to modify a power offset of an enhanced dedicated physical control channel (E-DPCCH).

5. The method of claim 1, wherein the active set update message further indicates to the WTRU whether to modify an E-TFCI threshold.

6. The method of claim 5, wherein boosting of E-DPCCH is enabled when an E-TFCI value exceeds the E-TFCI threshold.

7. A base station comprising:
a transceiver configured to transmit an active set update message that includes a modulation mode information element (IE), the modulation mode IE indicating to a WTRU whether to operate in a modulation mode,
a processor configured to add to the modulation mode IE at least one of:
a media access control (MAC) reset indicator that indicates to the WTRU whether to reset the MAC; or
an E-TFCI table index that indicates to the WTRU which E-TFCI transport block size table to use.

8. The base station of claim 7, wherein the modulation mode is 16-symbol quadrature amplitude modulation (16QAM).

9. The base station of claim 7, wherein the active set update message contains information enabling the WTRU to update an active set which indicates active cells available to the WTRU for communication.

10. The base station of claim 7, wherein the active set update message further indicates to the WTRU whether to modify a power offset of an enhanced dedicated physical control channel (E-DPCCH).

11. The base station of claim 7, wherein the active set update message further indicates to the WTRU whether to modify an E-TFCI threshold.

12. The base station of claim 11, wherein boosting of E-DPCCH is enabled when an E-TFCI value exceeds the E-TFCI threshold.

13. A method for reconfiguring a wireless transmit/receive unit (WTRU) in response to receiving an active set update message, the method comprising:
receiving the active set update message indicating whether to operate in a modulation mode;
in response to the active set update message, indicating to the lower layers to operate in or stop the modulation mode; and
identifying an index that indicates an E-TFCI transport block size table.

14. The method of claim 13, further comprising performing a media access control (MAC) reset when a MAC reset information element (IE) is included in the active set update message.

15. The method of claim 13, wherein the identified E-TFCI table index is increased by 2 when the WTRU is operating in a 16QAM mode.

16. The method of claim 13, wherein the presence of a modulation mode information element (IE) indicates to the WTRU to operate in the modulation mode, and the absence of the modulation mode IE indicates to the WTRU not to operate in the modulation mode.

17. The method of claim 13, wherein the modulation mode is 16-symbol quadrature amplitude modulation (16QAM).

18. The method of claim 13, wherein the active set update message contains information enabling the WTRU to update an active set which indicates active cells available to the WTRU for communication.

19. The method of claim 13, wherein identifying the index that indicates an E-TFCI transport block size table comprises:
using an E-TFCI Transport Block Size table indicated by an index received in a table index IE included in the active set update message; and
using an E-TFCI Transport Block Size table indicated by a previous index if the table index IE is not included in the active set update message.

20. A wireless transmit/receive unit (WTRU) comprising:
a transceiver configured to receive an active set update message indicating whether to operate in a modulation mode; and
a processor configured to indicate to lower layers to operate in or stop the modulation mode, and identify an E-TFCI transport block size table based on the active set update message.

21. The WTRU of claim 20, wherein the processor is further configured to perform a media access control (MAC) reset when a MAC reset information element (IE) is included in the active set update message.

22. The WTRU of claim 20, wherein the processor is further configured to use an E-TFCI transport block size table indicated by an index received in a table index IE when the table index IE is included in the active set update message, and use an E-DCH transport block size table indicated by a previous index when the table index IE is not included in the active set update message.

23. The WTRU of claim 20, wherein the processor is configured to operate in the modulation mode when a modulation mode IE is included in the active set update message, and stop operating in the modulation mode when the modulation mode IE is not included in the active set update message.

24. The WTRU of claim 20, wherein the modulation mode is 16-symbol quadrature amplitude modulation (16QAM).
